# EUROPEAN PATENT SPECIFICATION

(11) **EP 0 595 128 B1**
(45) Date of publication and mention of the grant of the patent: **08.01.1997**
(21) Application number: 93116641.7
(22) Date of filing: 14.10.1993
(51) Int. Cl.: B60T 8/18

(54) **Device for the load-dependent regulation of the brake pressure at the axles of a utility vehicle twin axle unit**
Vorrichtung zur lastabhängigen Regelung des Bremsdruckes an den Achsen eines Nutzfahrzeug-Doppelachsaggregates
Dispositif pour le réglage en fonction de la charge de la pression de freinage des essieux d'un ensemble d'essieux en tandem d'un véhicule utilitaire

(30) Priority: 27.10.1992 DE 4236241
(43) Date of publication of application: 04.05.1994
(73) Proprietor: IVECO MAGIRUS AG, D-89079 Ulm (DE)
(72) Inventor: Baur, Franz, D-7959 Stetten (DE); Hiermann, Ulrich, D-7922 Herbrechtingen (DE); Stürner, Johann, D-89079 Ulm/Gögglingen (DE)
(74) Representative: Boggio, Luigi

(56) References cited:
- CH-A- 319 820
- DE-A- 1 655 698
- DE-A- 2 241 546
- DE-A- 3 322 702
- DE-B- 1 183 814
- GB-A- 1 172 101
- US-A- 3 410 611

## Description

The invention relates to a device for the load-dependent regulation of the brake pressure at the axles of a twin axle unit of utility vehicles by means of a pressure-regulating valve which can be controlled via a master rod articulated to the two axles, a control rod articulated to said master rod, and a regulator lever articulated to said control rod, one end of said master rod being articulated to the free end of an essentially horizontal spring element extending essentially in the axial direction, the other end of said spring element being firmly connected to one of said two axles, said spring element comprising a single-sided lever and a resilient device.

The DE-A-3 322 702 discloses a regulating device of the above-mentioned type in which a spring element is used to prevent damage to the so-called ALB regulator and the master rod. The spring element has to compensate for the horizontal length variation, in particular when the second axle of the twin axle unit swings. It is also necessary to compensate for the vertical overtravel when the second axle undergoes spring action in order to prevent damage to the brake pressure regulator or pressure-regulating valve and the master rod. The spring element comprises a damping member which is subject to a comparatively large amount of wear during operation.

The US-A-3 410 611 discloses a load-responsive fluid-pressure control device wherein a lever is pivotally connected to a load indicating rod, in turn pivoted on a master rod linked between the two axles, and is connected by a lost motion device to a levelling device provided with damping means.

Taking the above-mentioned prior art as a basis, the object of the invention is to provide a regulating device of the type initially mentioned whose spring element is a simple structure, can be operated without suffering much wear so as to prevent damage to the pressure-regulating valve and the master rod and, in particular, also compensate for the overtravel when the brake pressure regulator is fitted.

The object on which the invention is based is solved by the features presented in the characteristic part of claim 1.

The subject matter of the invention is developed in an advantageous manner by the features of subclaims 2 to 13.

The essence of the invention is the construction of the spring element in the form of a single-sided lever and a resilient device which acts in the vertical direction and comprises a mechanical spring.

Good leverage is achieved if the resilient device is provided at the end of the single-sided lever which is firmly connected to the axle of the twin axle unit.

Three preferred variants are proposed in particular:

The first variant, which is described in subclaims 3 to 5, is characterised by a resilient device with a preloaded compression spring which extends perpendicularly to the single-sided lever and through which an essentially vertical fastening bolt passes which fastens the single-sided lever to the axle. The fastening bolt also passes through an upper and a lower slide disc, between which discs the single-sided lever is arranged. The compression spring is held and restrained in spring guides at the top and bottom. The spring element is therefore only resilient in the vertical direction during operation. It can swing in the horizontal direction without any spring force being exerted. The force for deflecting the spring element can be adjusted. In accordance with the object, the amount of wear occurring during operation is very low. This means that the useful life of the spring element is increased.

The second variant of the invention, which is described in subclaims 6 to 10, provides a resilient device with a preloaded mechanical compression spring which extends in the axial direction of the single-sided lever and is held in a pot which is fastened to the axle of the twin axle unit, the end of the single-sided lever which faces the compression spring comprising a fixed vertical cross-bolt, which is held and secured in the pot and vertically guided and restrained at the ends by a thrust piece, and a spherical centre of the cross-bolt pressing against a socket of the preloaded compression spring. The thrust piece comprises in particular vertically extending upper and lower prismatic recesses in which the free ends of the cross-bolt are guided. The thrust piece may alternatively comprise upper and lower semicircular recesses in which these free ends of the cross-bolt are guided. A retaining ring is used to secure the thrust piece in the free, unfastened end of the pot. The single-sided lever is in particular formed as a hollow tube with an enlargement at the end, in which enlargement the cross-bolt is fastened in the area of its ends, with the spherical centre being positioned centrally in the enlargement in a contact-free manner. A spring element formed in this way also permits a resilient vertical deflection of a regulator linkage, while the single-sided lever can be swung about the vertical axis of the cross-bolt when a horizontal deflection occurs without a resilient spring action taking effect. As in the case of the first variant, the result is improved control performance, i.e. the brake pressure regulator is subjected to less stress. The (slight) wear has no effect in functional terms. The individual component parts can be prefabricated as modules. They have a comparatively low weight. The device is comparatively unaffected by dirt during operation. Component parts can easily be replaced. Overtravel force and overtravel distances do not change when a replacement is carried out. The result of reducing the forces acting on the spherical head connection is particularly low-wear operation combined with an increased useful life of the device. With appropriate dimensioning, there is virtually no possibility of the pressure-regulating valve or the master rod being damaged.

Finally, a third variant of the invention, which is described in subclaims 11 to 13, is characterised by a spring element in the form of a mechanical torsion spring. The resilient device is therefore incorporated into the single-sided lever. The axis of rotation of the torsion spring extends essentially horizontally in the longitudinal direction of the vehicle, i.e. essentially perpendicularly to the vehicle axles. A development of the invention of this kind consists practically of a single lightweight component part which is easy to produce. Not only is there spring action in the vertical direction, but also in the horizontal direction, i.e. along the vehicle. The device is also subject to little wear during operation. Production costs are low and little maintenance work is required.

The invention is explained in detail in the following on the basis of embodiments and with reference to the accompanying drawings, in which:
Figure 1 is a diagrammatic plan view of a twin axle unit of a utility vehicle with a spring element in a first embodiment,
Figure 2 is a scaled-up plan view of the spring element according to Figure 1,
Figure 3 is a side view of the spring element according to Figure 2, viewed in the direction A of Figure 1,
Figures 4 and 5 show the spring element according to Figure 3 in a lower and an upper vertically deflected position,
Figures 6 and 7 are exploded side and plan views, respectively, of another spring element,
Figure 8 is a diagrammatic graph of the spring element (abscissa : vertical spring excursion s_{V}; ordinate : vertical spring force F_{V}),
Figures 9 and 10 are diagrammatic side and plan views, respectively, of a third spring element.

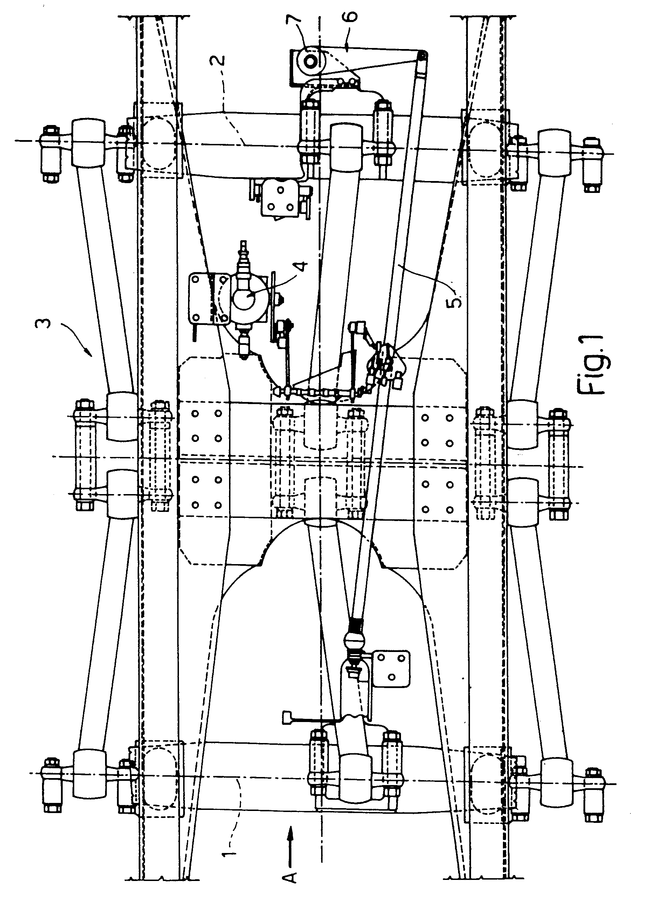

Figure 1 is a diagrammatic plan view of a twin axle unit 3 with a first axle 1 and a second axle 2, a device being provided for the load-dependent regulation of the brake pressure at the axles 1, 2 by means of a pressure-regulating valve 4. The pressure-regulating valve 4 is fastened to the frame and connected to the two axles 1 and 2 via a regulator linkage. The latter comprises a master rod 5, which is articulated to the two axles 1 and 2, a control rod, which is articulated to the master rod, and a regulator lever which is directly or indirectly articulated to the control rod and operates the pressure-regulating valve 4 or the ALB regulator. The end of the master rod 5 which is at the rear of the vehicle and on the right in Figure 1 is articulated to the free end of an essentially horizontal spring element 6, which extends essentially in the axial direction. The non-articulated end of the spring element 6 is firmly connected to the second axle 2 of the twin axle unit, with the possibility of a spring action taking place at least in the vertical direction.

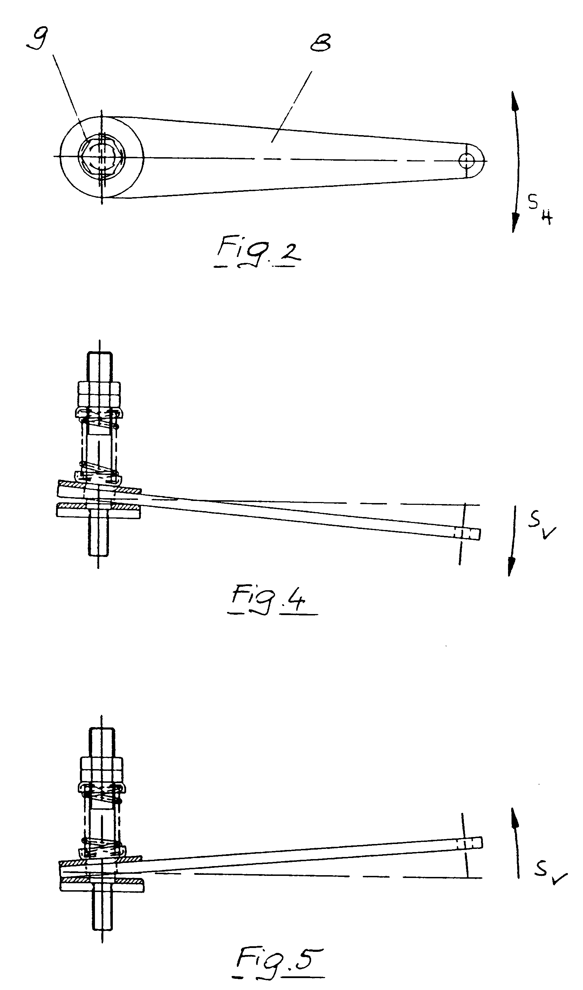

The spring element 6 is shown in greater detail in Figures 2 and 3. The lower and upper vertically deflected positions of the spring element are shown in Figures 4 and 5.

The spring element 6 according to Figures 2 to 5 comprises a single-sided lever 8 and a resilient device 9 in the form of a mechanical compression spring 10 consisting of spring steel. The compression spring 10 is disposed at the end of the single-sided lever 8 which is fastened to the second axle 2, the axis of the compression spring extending vertically and essentially perpendicularly to the single-sided lever 8 and being disposed at the top side of the lever. A vertical fastening bolt 11 is provided in particular at the fastening point and passes through the compression spring 10 and through a through-bore in the single-sided lever. An upper and a lower slide disc 12 are disposed in the immediate vicinity of the single-sided lever 8. Another disc, which is directly adjacent to the second axle 2 to be fastened, is disposed below the lower slide disc 12. The compression spring comprises an upper and a lower spring guide 13 and is preloaded downwards in the direction of the single-sided lever 8 by an upper nut 27.

As can be seen, the arrangement is such that upon a vertical deflection F_{V} of the master rod 5 a resilient deflection movement of the spring element downwards according to Figure 4 and upwards according to Figure 5 is possible. The single-sided lever 8 can easily be swung horizontally in the direction of the excursion s_{H} without any resilient spring force being exerted, as shown in Figure 2. In so doing the single-sided lever 8 slides on the slide discs 12 without any appreciable frictional force.

The entire device is arranged such that the preloading force of the vertical compression spring 10 can be adjusted by adjusting the nut 27, including the associated upper lock nut. The effective spring force F_{V} can thus be adjusted. This means that it is possible to prevent damage to an ALB regulator or linkage when spring deflection takes place in the overtravel range of the ALB regulator. The length of the master rod between the swing axles can be compensated by the horizontal movement s_{H}.

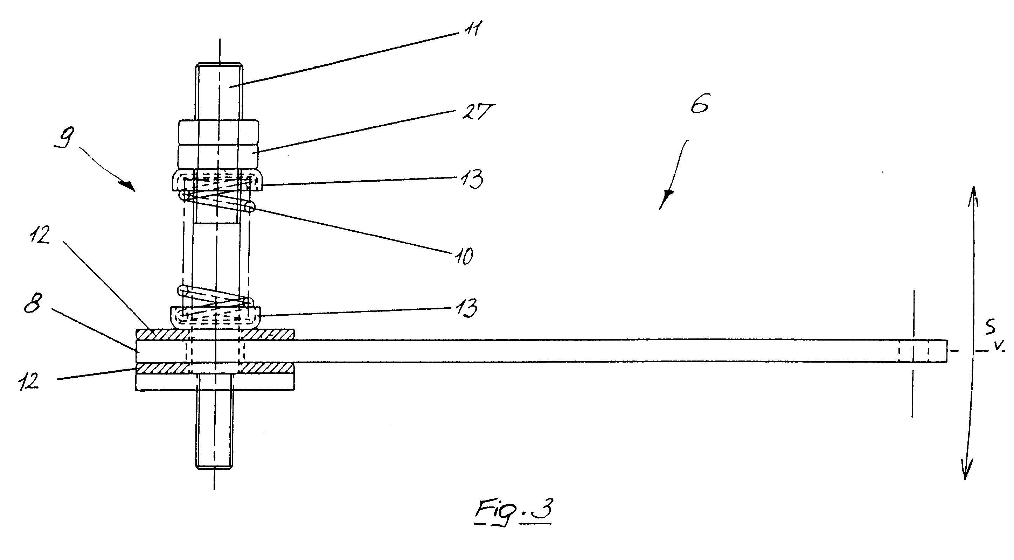

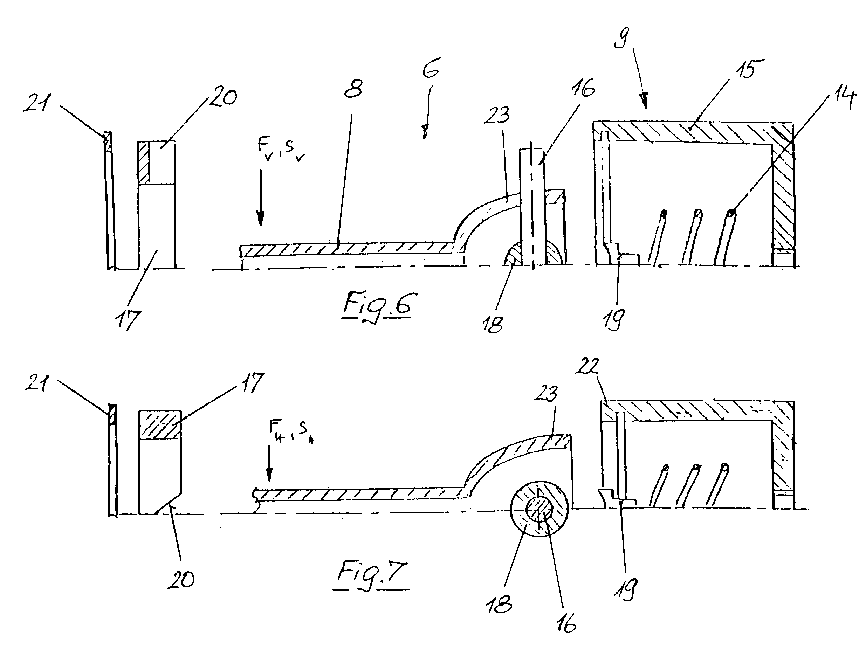

Figures 6 and 7 are exploded views of another spring element 6 in a diagrammatic vertical section and a diagrammatic horizontal section, respectively. The spring element 6 comprises a single-sided tubular lever 8, whose end which is broken off on the left in the drawings is articulated to the master rod. The end of the single-sided lever which is on the right in the drawings comprises a tubular hemispherical enlargement 23 in which a cross-bolt 16 is fastened in the vertical direction in the area of its ends. The cross-bolt 16 comprises a spherical centre 18, which engages in a flexible manner in a concave holding socket 19. The socket 19 is supported on the other side by a compression spring 14, the other end of which is restrained against the bottom of a pot 15, which in turn is firmly connected to the second axle 2 of the twin axle unit. The compression spring 14 lies in an extension of the axis of the single-sided lever 8 and is preloaded by an annular thrust piece 17, which comprises a radially outer upper and lower prismatic recess 20. The upper and lower free ends of the cross-bolt 16 are held in the prismatic recesses 20. When the entire arrangement is assembled the cross-bolt 16 and the thrust piece 17 are disposed in the unfastened end 22 of the pot 15 and are held by a retaining ring 21 in the pot against the force of the compression spring 14.

It can be seen that the left-hand free end of the single-sided lever 8 can be deflected by the vertical spring excursion s_{V} according to Figure 6 upon the action of a vertical force F_{V} when the compression spring 14 is compressed. When a horizontal force F_{H} is exerted the left-hand end of the single-sided lever 8 is deflected by the horizontal deflection excursion s_{H} according to Figure 7 by swinging the single-sided lever 8 about the vertical axis of the spring bolt 16. The compression spring 14 is not in this case deflected or compressed and does not therefore exert any spring force.

For assembly purposes the single-sided lever 8 is firstly preassembled with the cross-bolt 16 and the spherical centre 18. Following the insertion of the compression spring 14, this pre-completed unit is placed in the pot 15, which is fastened to the second axle 2, after which the thrust piece is placed on the pre-completed unit such that the cross-bolt 16 comes to lie in the prismatic recesses 20, which are staggered by 180°. The entire unit is finally compressed and the retaining ring 21 mounted in the pot 15.

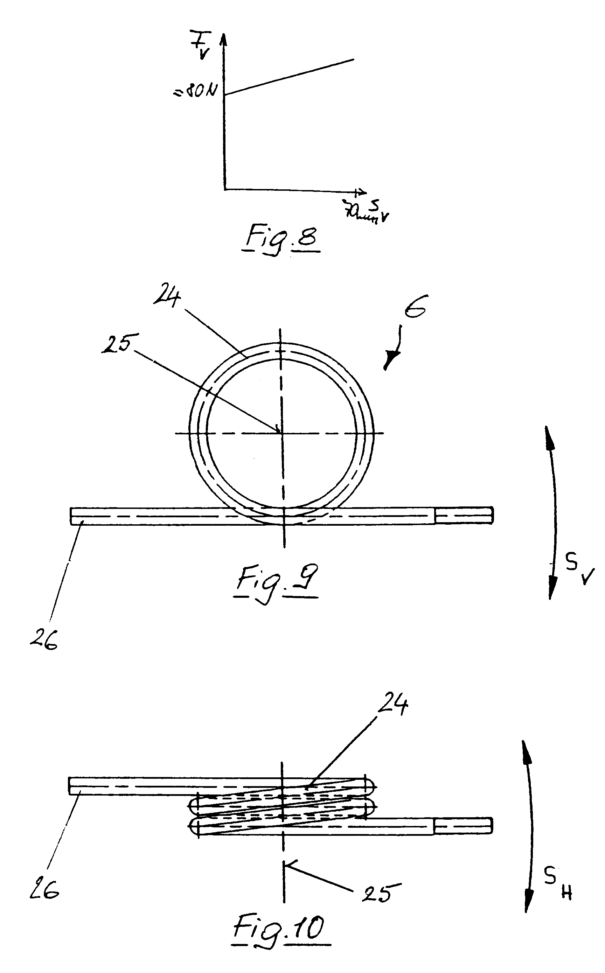

A characteristic according to Figure 8 is achieved when the spring element 6 is positioned according to Figure 6. The vertical force F_{V} is achieved by further compression of the preloaded compression spring 14 as a result of the cross-bolt 16 being supported in the upper prismatic recess 20 of the thrust piece 17 and thus moving the spherical centre 18 to the right through the vertical excursion s_{V} and further compressing the compression spring 14.

In the position according to Figure 7 the horizontal force F_{H} is constant over the entire horizontal excursion s_{H}, being in particular almost zero. This means that only slight frictional forces are present.

Should a slight degree of wear also occur in the prismatic guides at a high level of operation, this would be of no significance in functional terms, as it would only result in the spring element being extended by the wear and the brake pressure regulator linkage thus displaced transversely to the direction of travel (maximum value 0.5 mm). However the height which is set and therefore also the ALB setting are not altered. The prismatic recess may be replaced by a semicircular recess in the thrust piece 17 which is adapted to the outer contour of the circular cross-bolt 16.

The embodiment of Figures 9 and 10 shows a spring element 6 in which the single-sided lever 8 and the resilient mechanical spring device are integrally formed. The spring element 6 is in particular a torsion spring 24 with extended rectilinear paraxial ends which, according to Figure 9, are disposed at the underside of the torsion spring. The torsion spring 24 has an axis of rotation 25 which extends horizontally in the longitudinal direction of the vehicle. The end 26 shown on the left-hand side in Figures 9 and 10 is firmly secured to the second axle 2, while the master rod (not shown) is articulated to the right-hand end of the torsion spring. The latter end may be deflected in a resilient manner in the vertical direction over the vertical excursion s_{V} during operation in accordance with Figure 9. A resilient deflection is also possible in the horizontal direction according to Figure 10 if the horizontal spring excursion s_{H} is covered, so as to compensate for the length of the master rod when there is a swinging movement.

## Claims

1. Device for the load-dependent regulation of the brake pressure at the axles (1, 2) of a twin axle unit (3) of utility vehicles by means of a pressure-regulating valve (4) which can be controlled via a master rod (5) articulated to the two axles (1, 2), a control rod articulated to said master rod (5), and a regulator lever articulated to said control rod, one end of said master rod (5) being articulated to the free end of an essentially horizontal spring element (6) extending essentially in the axial direction, the other end (7, 16, 26) of said spring element (6) being firmly connected to one (2) of said two axles (1, 2), said spring element (6) comprising a single-sided lever (8) and a resilient device (9), characterised in that said resilient device (9) comprises a mechanical spring (10, 14, 24) so arranged that its resilient action operates in the vertical direction of the movement of said single-sided lever (8), without taking effect in the horizontal direction of the movement of said single-sided lever (8).

2. Device according to claim 1, characterised in that the resilient device (9) is provided at the end (7, 16) of said single-sided lever (8) which is firmly connected to said one axle (2).

3. Device according to claim 1 or 2, characterised in that the resilient device (9) comprises a preloaded compression spring (10) which extends essentially perpendicularly and through which an essentially vertical fastening bolt (11) passes which fastens the single-sided lever (8) to said one axle (2).

4. Device according to claim 3, characterised in that the fastening bolt (11) passes through an upper and a lower slide disc (12), between which discs (12) the single-sided lever (8) is arranged.

5. Device according to claim 3 or 4, characterised in that the compression spring (10) is held and restrained in spring guides (13) at the top and bottom, through which guides (13) the fastening bolt (11) passes.

6. Device according to claim 2, characterised in that the resilient device (9) comprises a preloaded compression spring (14) which extends in the axial direction of the single-sided lever (8) and is held in a pot (15) which is fastened to the axle (2), and that the end of the single-sided lever (8) which faces the compression spring (14) comprises a vertical cross-bolt (16), which is firmly connected to the lever, held and secured in the pot (15) and vertically guided and restrained at the ends by a thrust piece (17), a spherical centre (18) of the cross-bolt (16) pressing against a socket (19) of the preloaded compression spring (14).

7. Device according to claim 6, characterised in that the thrust piece (17) comprises vertically extending upper and lower prismatic recesses (20) in which the free ends of the cross-bolt (16) are guided.

8. Device according to claim 6, characterised in that the thrust piece (17) comprises vertically extending upper and lower semicircular recesses in which the free ends of the cross-bolt (16) are guided.

9. Device according to one of claims 6 to 8, characterised in that the thrust piece (17) is secured in the free, unfastened end (22) of the pot (15) by a retaining ring (21).

10. Device according to one of claims 6 to 9, characterised in that the single-sided lever (8) is a hollow tube with an enlargement (23) at the end, in which enlargement the cross-bolt (16) is fastened in the area of its ends, the spherical centre (18) being positioned centrally in the enlargement (23) in a contact-free manner.

11. Device according to claim 1, characterised in that the resilient device (9) is incorporated into the single-sided lever (8) and formed as a torsion spring (24).

12. Device according to claim 11, characterised in that the axis of rotation (25) of the torsion spring (24) extends essentially horizontally in the longitudinal direction of the vehicle.

13. Device according to claim 11 or 12, characterised in that one end (26) of the torsion spring (24) is firmly connected to the axle (2), while the other end of the torsion spring (24) is articulated to the master rod (5).

## Patentansprüche

1. Vorrichtung zur lastabhängigen Regelung des Bremsdrucks an den Achsen (1, 2) einer Doppelachseinheit (3) von Nutzfahrzeugen mit Hilfe eines Druckregelventils (4), das mit Hilfe einer an die beiden Achsen (1, 2) angelenkten Geberstange (5), einer an diese angelenkten Steuerstange und eines an die Steuerstange angelenkten Regelhebels steuerbar ist, wobei ein Ende der Geberstange (5) an das freie Ende eines im wesentlichen in Achsrichtung verlaufenden, im wesentlichen waagerechten Federelements (6) angelenkt ist, dessen anderes Ende (7, 16, 26) fest mit einer (2) der beiden Achsen (1, 2) verbunden ist, welches Federelement (6) einen einseitigen Hebel (8) und eine elastische Einrichtung (9) umfaßt, dadurch gekennzeichnet, daß die elastische Einrichtung (9) eine mechanische Feder (10, 14, 24) aufweist, die so angeordnet ist, daß ihre Federwirkung in der senkrechten Richtung der Bewegung des einseitigen Hebels (8) wirkt, ohne die Bewegung des einseitigen Hebels (8) in waagerechter Richtung zu beeinflussen.

2. Vorrichtung nach Anspruch 1, dadurch gekennzeichnet, daß die elastische Einrichtung (9) am Ende (7, 16) des einseitigen Hebels (8) vorgesehen ist, der fest mit der einen Achse (2) verbunden ist.

3. Vorrichtung nach Anspruch 1 oder 2, dadurch gekennzeichnet, daß die elastische Einrichtung (9) eine vorgespannte Druckfeder (10) umfaßt, die sich im wesentlichen senkrecht erstreckt und durch die ein im wesentlichen senkrechter Befestigungsbolzen (11) hindurchgeht, der den einseitigen Hebel (8) an der Achse (2) festlegt.

4. Vorrichtung nach Anspruch 3, dadurch gekennzeichnet, daß der Befestigungsbolzen (11) durch eine obere und eine untere Gleitscheibe (12) hindurchgeht, zwischen welchen Scheiben (12) der einseitige Hebel (8) angeordnet ist.

5. Vorrichtung nach Anspruch 3 oder 4, dadurch gekennzeichnet, daß die Druckfeder (10) an der oberen und unteren Seite durch Federführungen (13) gehalten und abgestützt ist, durch welche Führungen (13) der Befestigungsbolzen (11) hindurchgeht.

6. Vorrichtung nach Anspruch 2, dadurch gekennzeichnet, daß die elastische Einrichtung (9) eine in Achsrichtung des einseitigen Hebels (8) verlaufende, vorgespannte Druckfeder (14) umfaßt, die in einem an der Achse (2) befestigten Topf gehalten ist, und daß das Ende des einseitigen Hebels (8), das der Druckfeder (14) gegenüberliegt, einen senkrechten Querbolzen (16) aufweist, der fest mit dem Hebel verbunden ist und in dem Topf (50) befestigt ist und an den Enden durch ein Druckstück (17) geführt und verspannt ist, wobei ein Kugelzentrum (18) des Querbolzens (16) gegen eine Muffe (19) der vorgespannten Druckfeder (14) drückt.

7. Vorrichtung nach Anspruch 6, dadurch gekennzeichnet, daß das Druckstück (17) vertikal verlaufende, obere und untere Prismenaussparungen (20) aufweist, in denen die freien Enden des Querbolzens (16) geführt sind.

8. Vorrichtung nach Anspruch 6, dadurch gekennzeichnet, daß das Druckstück (17) senkrecht gerichtete obere und untere, halbkreisförmige Ausnehmungen aufweist, in denen die freien Enden des Querbolzens (16) geführt sind.

9. Vorrichtung nach einem der Ansprüche 6 bis 8, dadurch gekennzeichnet, daß das Druckstück (17) in den freien, nicht befestigten Enden (22) des Topfes (15) durch einen Haltering (21) gesichert ist.

10. Vorrichtung nach einem der Ansprüche 6 bis 9, dadurch gekennzeichnet, daß der einseitige Hebel (8) ein hohles Rohr mit einer Erweiterung (23) am Ende ist, in welcher Erweiterung der Querbolzen (16) im Bereich seiner Enden befestigt ist, wobei das Kugelzentrum (18) zentral in der Erweiterung (23) in kontaktfreier Weise angeordnet ist.

11. Vorrichtung nach Anspruch 1, dadurch gekennzeichnet, daß die elastische Einrichtung (9) in den einseitigen Hebel (8) integriert und als Torsionsfeder (24) ausgebildet ist.

12. Vorrichtung nach Anspruch 11, dadurch gekennzeichnet, daß die Drehachse (25) der Torsionsfeder (24) im wesentlichen waagerecht in der Längsrichtung des Fahrzeugs verlauft.

13. Vorrichtung nach Anspruch 11 oder 12, dadurch gekennzeichnet, daß das eine Ende (26) der Torsionsfeder (24) fest mit der Achse (2) verbunden ist, während das andere Ende der Torsionsfeder (24) gelenkig mit der Geberstange (5) verbunden ist.

## Revendications

1. Dispositif pour le réglage, en fonction de la charge, de la pression de freinage des essieux (1, 2) d'un ensemble d'essieux en tandem (3) de véhicules utilitaires, au moyen d'une soupape de réglage de pression (4) pouvant être commandée par une tige maître (5) articulée par rapport aux deux essieux (1, 2), une tige de commande articulée par rapport à la tige maître (5), et un levier de régulateur articulé par rapport à la tige de commande, une extrémité de la tige maître (5) étant articulée par rapport à l'extrémité libre d'un élément de ressort essentiellement horizontal (6) s'étendant essentiellement dans la direction axiale, l'autre extrémité (7, 16, 26) de l'élément de ressort (6) étant solidement reliée à l'un (2) des deux essieux (1, 2), et cet élément de ressort (6) comprenant un levier à un seul côté (8) ainsi qu'un dispositif élastique (9),
caractérisé en ce que
le dispositif élastique (9) comprend un ressort mécanique (10, 14, 24) disposé de façon que son action élastique s'applique dans la direction verticale du mouvement du levier à un seul côté (8), sans avoir d'effet dans la direction horizontale du mouvement de ce levier à un seul côté (8).

2. Dispositif selon la revendication 1,
caractérisé en ce que
le dispositif élastique (9) est monté à l'extrémité (7, 16) du levier à un seul côté (8) qui est solidement reliée à l'essieu (2).

3. Dispositif selon la revendication 1 ou 2,
caractérisé en ce que
le dispositif élastique (9) comprend un ressort de compression préchargé (10) s'étendant essentiellement perpendiculairement et à travers lequel passe un boulon de fixation essentiellement vertical (11) qui fixe le levier à un seul côté (8) à l'essieu (2).

4. Dispositif selon la revendication 3,
caractérisé en ce que
le boulon de fixation (11) passe à travers un disque de glissement supérieur et un disque de glissement inférieur (12), disques (12) entre lesquels est monté le levier à un seul côté (8).

5. Dispositif selon la revendication 3 ou 4,
caractérisé en ce que
le ressort de compression (10) est maintenu et retenu en haut et en bas dans des guides de ressort (13), guides (13) à travers lesquels passe le boulon de fixation (11).

6. Dispositif selon la revendication 2,
caractérisé en ce que
le dispositif élastique (9) comprend un ressort de compression préchargé (14) qui s'étend dans la direction axiale du levier à un seul côté (8) et qui est maintenu dans un pot (15) fixé à l'essieu (2), et en ce que l'extrémité du levier à un seul côté (8) qui vient en face du ressort de compression (14), comprend un boulon transversal vertical (16) qui est solidement relié au levier, maintenu et fixé dans le pot (15), et qui est guidé et retenu verticalement aux extrémités par une pièce de butée (17), le centre sphérique (18) du boulon transversal (16) venant s'appuyer contre une douille (19) du ressort de compression préchargé (14).

7. Dispositif selon la revendication 6,
caractérisé en ce que
la pièce de butée (17) comprend des évidements prismatiques supérieur et inférieur s'étendant verticalement (20), dans lesquels sont guidées les extrémités libres du boulon transversal (16).

8. Dispositif selon la revendication 6,
caractérisé en ce que
la pièce de butée (17) comprend des évidements semicirculaires supérieur et inférieur s'étendant verticalement, dans lesquels sont guidées les extrémités libres du boulon transversal (16).

9. Dispositif selon l'une des revendications 6 à 8,
caractérisé en ce que
la pièce de butée (17) est fixée dans l'extrémité libre, non fixée (22) du pot (15) par un anneau de retenue (21).

10. Dispositif selon l'une des revendication 6 à 9,
caractérisé en ce que
le levier à un seul côté (8) est un tube creux comportant un agrandissement (23) à l'extrémité, agrandissement dans lequel le boulon transversal (16) est fixé dans la zone de ses extrémités, le centre sphérique (18) étant positionné au centre de l'agrandissement (23), d'une manière sans contact.

11. Dispositif selon la revendication 1,
caractérisé en ce que
le dispositif élastique (9) est incorporé dans le levier à un seul côté (8) et réalisé sous la forme d'un ressort de torsion (24).

12. Dispositif selon la revendication 11,
caractérisé en ce que
l'axe de rotation (25) du ressort de torsion (24) s'étend essentiellement horizontalement dans la direction longitudinale du véhicule.

13. Dispositif selon la revendication 11 ou 12,
caractérisé en ce que
l'extrémité (26) du ressort de torsion (24) est solidement reliée à l'essieu (2), tandis que l'autre extrémité du ressort de torsion (24) est articulée par rapport à la tige maître (5).
